Europäisches Patentamt

**European Patent Office**

**Office européen des brevets**

(11) Publication number:

**0 083 724**

**A1**

(12) **EUROPEAN PATENT APPLICATION**

(21) Application number: **82110959.2**

(22) Date of filing: **26.11.82**

(51) Int. Cl.³: **B 60 R 21/10**

(30) Priority: **04.12.81 JP 194379/81**

(43) Date of publication of application:
**20.07.83 Bulletin 83/29**

(84) Designated Contracting States:
**DE FR GB**

(71) Applicant: **NISSAN MOTOR COMPANY, LIMITED**
No.2, Takara-cho, Kanagawa-ku
Yokohama City(JP)

(72) Inventor: **Miki, Hiroyuki**
No. 4-11-29, Kamitsuruma
Sagamihara City(JP)

(72) Inventor: **Okuyama, Hiroo**
No. 2-13-31, Saito Konan-ku
Yokohama City(JP)

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Improved passive seat belt arrangement for automotive vehicle or the like.**

㉗ The radius (R) of curvature of the curved or corner portion (T) of the seat belt guide rail (1) is arranged to be greater than the distance (L) between the guide rail (1) and the point at which the seat belt (4) is pivotally connected to a sliding mechanism (8) disposed within the rail (1) per se, so that the path followed by the upper end of the sea belt (4) is smooth and regular and free from irregularities which induce neck scrubbing.

FIG.2

EP 0 083 724 A1

0083724

GRUNECKER · DR. KINKELDEY · DR. STOCKMAIR
DR. SCHUMANN · JAKOB · DR. BEZOLD · MEISTER
HILGERS · DR. MEYER · PLATH

# IMPROVED PASSIVE SEAT BELT ARRANGEMENT
# FOR AUTOMOTIVE VEHICLE OR THE LIKE

## BACKGROUND OF THE INVENTION

### Field of the Invention

The present invention relates generally to a passive seat belt arrangement and more specifically to an arrangement which permits the upper end of the belt to trace out a smooth, ripple-free locus as it moves from an occupant restraining position to a position wherein the ingress/egress into or out of the vehicle is rendered possible.

### Description of the Prior Art

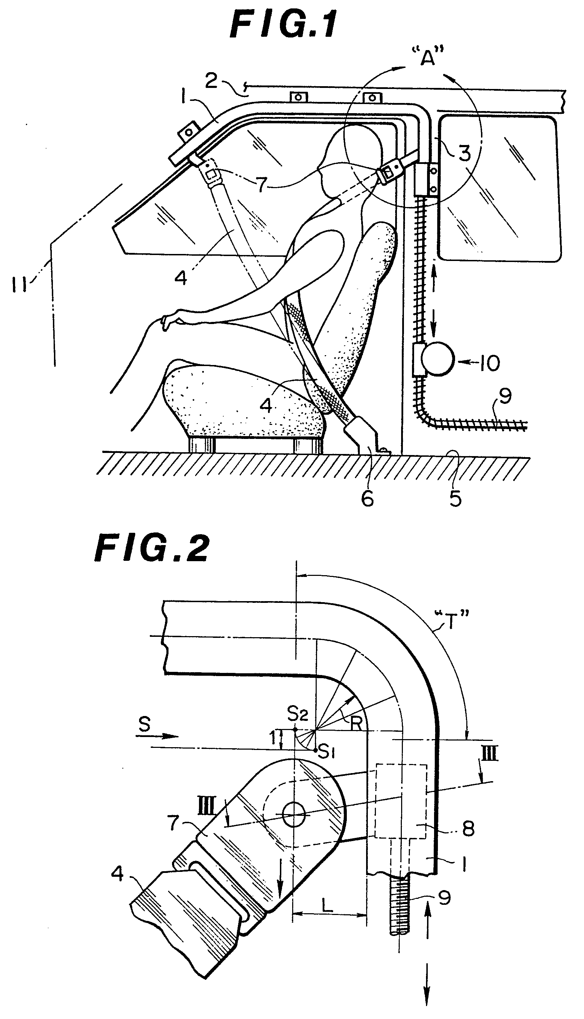

In a previously proposed passive seat belt arrangement shown in Figs. 1 to 3, a guide rail 1, via which movement of the upper end of the seat belt harness is induced, is secured partially to the roof side rail 2 and the center pillar 3 of the vehicle. The lower end of the harness 4 is connected to the floor panel 5 of the vehicle through a intertia-lock type retractor 6. The upper end of the harness 4 is provided with a releasable buckle 7 the main body portion of which is operatively connected to a slider member 8 which is slidably disposed in a tube (not shown) disposed within the guide rail 1. The slider 8 is operatively connected to a helically ribbed cable 9 which may driven in either of the axial directions thereof by an electric motor and worm gear arrangement 10 which is suitable energized by a switch (not shown) responsive to the opening and closing of the door 11.

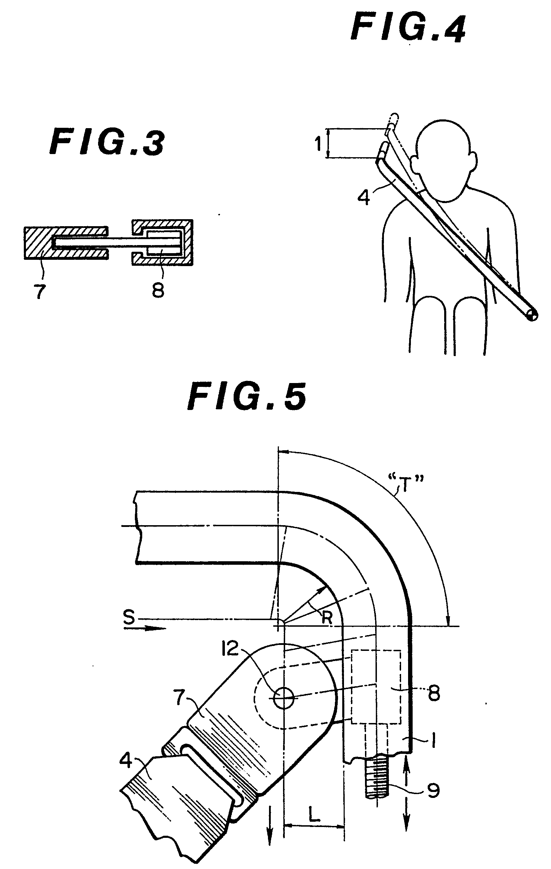

However, this arrangement has suffered from the drawback that the vehicle is inevitably provided with a door having a so called "half door" construction (wherein the window sash is a seperate member fixed to the body of the door formed of pressed inner and outer panels) the angle defined between the roof side rail and the center pillar the radius of curvature of the guide rail at the top rear corner of the door aperture has been severely limited so that it may be concealed by relatively narrow window sash member to maintain an aesthetic appearance. This has induced the problem that the length "L" defined between the inner periphery of the guide rail and the pivot point of the belt buckle (pivotally mounted on a bracket extending from the slider) has for practical reasons, had to be greater than the radius "R",whereby, as the slider traverses the corner, the pivot point of the buckle, during the movement of the slider in the direction "S" to apply the belt, firstly travels to point $S_1$ whereafter it traces a curved path from "$S_1$" to "$S_2$". From "$S_2$" it traces directly downward. This particular movement of the belt buckle 7 and upper end of the harness 4, induces an elevation or lifting of the belt by a distance "l" (highlighted in Fig. 4) prior to its decent to a passenger securing home position and induces a very unpleasant neck scrubbing or rubbing phenomenon.

## SUMMARY OF THE INVENTION

It is therefore and object of the present invention to provide a passive seat belt which causes the upper end of the belt to trace a smooth regular path as the mechanism associated therewith draws same about the top rear corner of the door aperture.

The present invention features an ingeniously simple arrangement wherein the length of the bracket extending out of the guide rail is rendered shorter than the radius of curvature of the curved portion of the guide rail and the aforementioned drawback eliminated.

More specifically the invention takes the form of a passive seat belt arrangement for a vehicle having a door aperture defined in part by a roof side rail and a center piller, comprising: a guide rail secured to the roof side rail and the center pillar, the guide rail having a curved portion having a predetermined radius of curvature, a slider operatively disposed in the guide rail and arranged to be driven in first and second axial directions along the rail by motor means, a bracket fixedly connected to slider for supporting the upper end of a seat belt harness, the bracket extending beyond the guid rail and supporting the upper end of said seat belt harness at a predetermined distance from the guide rail· which is shorter than the predetermined radius of curvature.

## BRIEF DESCRIPTION OF THE DRAWINGS

In the accompanying drawings:

Fig. 1 is a schematic elevation of the prior art arrangement discussed in the opening paragraphs of the present disclosure;

Fig. 2 is an enlarged view of the portion encircled by circle "A" in Fig. 1;

Fig. 3 is a sectional view taken along section line III - III of Fig. 2;

Fig. 4 is a front schematic elevation showing the lifting phenonmenon which plagues the prior art arrangement; and

Fig. 5 is a front elevation showing the arrangement which characterizes the present invention.

## DESCRIPTION OF THE PREFERRED EMBODIMENTS

With the recent advent of the so called "pressed" or "full door" type door construction, wherein the door is formed essentially of the inner and wherein the outer panels and the window aperture puched or otherwise pressed formed in panels, the window sash portion of the door is inherently wide and must be shaped so as to seat in a shallow recess formed in the roof and/or the roof side rail panels. Accordingly, it has been realized that it is now possible to increase the radius "R" of the curved portion of the seat belt guide rail and conceal same using the broad window sash inherently possible with "full doors" without impairing the external appearance of the vehicle.

Thus, as shown in Fig. 5, the embodiment of the present invention features the arrangement wherein the length "L" is shorter than the radius "R" whereby as the slider member 8 traverses the corner portion of the guide rail "T" the pin 12 on which the belt buckle is pivotally mounted traces a path or locus, which as shown, is free of the irregular movement plaguing the prior art arrangement enabling the seat belt harness 4 to be drawn smoothly down onto (or vice versa) the occupants shoulder without abrasion to his or her neck.

WHAT IS CLAIMED IS:

1.    In a vehicle having a door aperture defined in part by a roof side rail and a center pillar, a passive seat belt arrangement comprising:

a guide rail secured to said roof side rail and said center pillar, said guide rail having a curved portion having a predetermined radius of curvature;

a slider operatively disposed in said guide rail and arranged to be driven in first and second axial directions along said rail by motor means;

a bracket fixedly connected to slider for supporting the upper end of a seat belt harness, said bracket extending beyond said guide rail and supporting said upper end of said seat belt harness at a predetermined distance from said guide rail which is shorter than said predetermined radius of curvature.

2.    A passive seat belt arrangement as claimed in claim 1, further comprising a door for closing said door aperture, said door being formed of essentially an inner and an outer panel and with a wide window sash portion.

3.    A passive seat belt arrangement as claimed in claim 2, wherein said motor means is responsive to the opening and closing of said door.

# FIG.1

# FIG.2

**FIG.4**

**FIG.3**

**FIG.5**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 822 064  (VOLKSWAGENWERK)  * Claim ; figure *  --- | | B 60 R  21/10 |
| A | US-A-4 277 088  (I. SUZUKI et al.)  * Figure 1 *  ----- | | |

| TECHNICAL FIELDS SEARCHED (Int Cl ³) |
|---|
| B 60 R  21/00 |

The present search report has been drawn up for all claims

| Place of search | Date of completion of the search | Examiner |
|---|---|---|
| BERLIN | 28-02-1983 | BECKER W D H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82